# EUROPÄISCHE PATENTSCHRIFT

(11) **EP 3 874 092 B1**
(45) Veröffentlichungstag und Bekanntmachung des Hinweises auf die Patenterteilung: **02.07.2025**
(21) Anmeldenummer: 19797696.2
(22) Anmeldetag: 31.10.2019
(51) Int. Cl.: D21F 1/40

(54) **BREITSTRECKWALZE**
SPREADER ROLL
ROULEAU DÉPLISSEUR

(30) Priorität: 31.10.2018 DE 102018127250
(43) Veröffentlichungstag der Anmeldung: 08.09.2021
(73) Patentinhaber: Kampf GmbH, 51674 Wiehl (DE)
(72) Erfinder: ROSSENBACH, Andreas, 51597 Morsbach (DE)
(74) Vertreter: Hoener, Matthias
(86) Internationale Anmeldenummer: PCT/EP2019/079870
(87) Internationale Veröffentlichungsnummer: WO 2020/089414

(56) Entgegenhaltungen:
- WO-A1-2004/111334
- DE-A1- 19 927 897
- DE-A1- 3 221 011
- DE-U1- 29 602 948
- US-A- 3 604 087

## Beschreibung

Die Erfindung betrifft eine Vorrichtung mit einer Breitstreckwalze, die ein Walzenrohr aufweist, über das eine Materialbahn geführt ist, wobei diese durch eine Verbiegung der Breitstreckwalze entlang ihrer Längsachse breitstreckbar ist, mit zwei Lagerzapfen, die mit dem Walzenrohr in Wirkverbindung stehen und in einem Maschinegestell schwenkbar angelenkt sind, gemäß den Merkmalen des Patentanspruches 1.

Eine Vorrichtung mit einer Breitstreckwalze ist aus der DE 103 41 119 A1 bekannt. Dabei wird ein Walzenrohr vorgeschlagen, das durch zugeordnete Mittel zur Einleitung von Biegemomenten ausgebildet ist. Dazu sind Lagerbolzen vorgesehen, die über ein Schwenklager am Maschinengestell befestigt sind. Sie können über einen Verstellmechanismus verschwenkt werden, was zu einer Einleitung eines Biegemoments in das Walzenrohr führt. Die Lagerzapfen greifen dabei an die stirnseitigen Enden des Walzenrohres an. Es ist auch vorgesehen, das Walzenrohr an den Lagerzapfen über zwei beabstandete Lager zu führen. Dabei ist das Walzenrohr an seinem Ende vom inneren Lager ausgehend erheblich konisch verdünnt, so dass ein ungleichmäßiger Aufbau der Biegemomente an dem Walzenrohr zu befürchten ist. Es ist weiterhin eine Leitwalze für eine Bahn aus Papier oder ähnlichem Material bekannt, DE 196 01 844 A1, bei der die eine einzelne oder mehrere Einzelleitwalzen tragende Welle gebogen werden kann, um die Druckverteilung auf die Bahn zu vergleichmäßigen und einzustellen.

Eine Vorrichtung mit einer Breitstreckwalze gemäß dem Oberbegriff des Anspruchs 1 ist aus DE 32 21 011 A1 bekannt.

Der Erfindung liegt die Aufgabe zugrunde, eine gattungsgemäße Vorrichtung mit einer Breitstreckwalze so zu verbessern, dass die beschriebenen Nachteile vermieden werden.

Diese Aufgabe ist durch die Merkmale des Patentanspruches 1 gelöst

Erfindungsgemäß ist vorgesehen, dass die Lagerzapfen mittels schwenkbarer Lager am Maschinengestell gelagert sind und diese die Lager überragende Längszapfen aufweisen, an deren Ende radial angreifende Verstellmittel angeordnet sind. Die Lager sind etwa mittig auf dem Lagerzapfen angeordnet, wobei etwa die eine Hälfte der Breitstreckwalze zugeordnet ist und die äußere als Längszapfen bezeichnete Hälfte das schwenkbare Lager überragt. Der Lagerzapfen ist daher nach Art eines Pendels um das schwenkbare Lager am Maschinengestell geführt. Je nach Ausgestaltung der Lagerzapfen, die mit dem Walzenrohr mitdrehend und/oder am Maschinegestell drehfest ausgebildet sein können, sind die Verstellmittel zur Verschwenkung der Lagerzapfen ausgebildet. Dreht sich der Lagerzapfen mit, so weisen die Verstellmittel am Längszapfen angreifende Lager auf, an deren Gehäuse die Verstellmittel angreifen. Durch die Verstellmittel, die im Wesentlichen senkrecht zur Längsachse des Lagerzapfen eine Kraft auf diesen ausüben, kann das gegenüberliegende Ende des Lagerzapfens ausgelenkt und eine Durchbiegung des Walzenrohres bewirkt werden. Die Betätigung der Verstellmittel kann gleichartig oder auch unterschiedlich zueinander erfolgen.

In vorteilhafter Weise sind die Verstellmittel in Umfangsrichtung der Breitstreckwalze verdrehbar angeordnet, so dass die Richtung der Durchbiegung des Walzenrohres in Umfangsrichtung ausgerichtet werden kann. Dabei sind die Verstellmittel auf einer Hülse angeordnet, die im Maschinengestellt schwenkbar gelagert ist. Die Verdrehung der Verstellmittel kann von Hand erfolgen, wobei aber vorzugsweise ein Drehantrieb mit großer Übersetzung vorgesehen ist.

Die Verstellmittel ihrerseits können bezüglich der Wirkrichtung der Kraft zur Erzeugung des Biegemomentes parallel oder aber winkelversetzt zueinander angeordnet sein.

Die Verstellmittel ihrerseits können eine Gewindestange mit Spannmutter aufweisen, die wiederum von Hand oder mittels eines Antriebselements verstellt werden kann.

Das schwenkbare Lager des Lagerzapfens ist insbesondere dann, wenn der Lagerzapfen mitdreht, als Pendellager, vorzugsweise mehrreihiges Pendelrollenlager, ausgeführt.

Der Lagerzapfen kann im Walzenrohr mittels zweier mit Abstand zueinander angeordneter Lager, die vorzugsweise als Pendellager ausgebildet sind, ausgeführt sein. Dann ist dem Walzenrohr ein eigener Drehantrieb zugeordnet. Das Walzenrohr hat vorzugsweise eine über seine ganze Länge gleichbleibende Wandstärke.

Die Lagerzapfen können aber auch im Walzenrohr fixiert, mittels Passung eingebaut sein. Dann kann der Antrieb des Walzenrohres über einen der Lagerzapfen erfolgen.

In weiterer Ausgestaltung der Erfindung wird vorgeschlagen, dass die Lagerzapfen Bestandteile einer Welle sind, auf der das Walzenrohr geführt ist oder bei der die Welle selbst als Breitsteckwalze ausgebildet ist.

In Weiterbildung der Erfindung sind Messmittel vorgesehen sind, wobei die Verbiegung des Walzenrohres am Ort der Verstellmittel durch die Messmittel bestimmt wird. Durch die Erfassung der Verbiegung des Walzenrohres kann durch eine entsprechende Steuerung beziehungsweise Regelung mittels der Verdrehmittel die Verbiegung gezielt eingestellt oder beispielsweise während des laufenden Betriebes geregelt werden, um eine weitestgehend konstante vorgegebene Verbiegung einzuhalten.

Ein Ausführungsbeispiel der Erfindung ist in den Zeichnungen vereinfacht dargestellt.

Es zeigen:
- Figur 1:: eine Seitenansicht einer Vorrichtung mit einer Breitsteckwalze,
- Figur 2:: einen Schnitt durch die Vorrichtung und die Breitstreckwalze gemäß der Linie A-A in Figur 1,
- Figur 3:: eine Seitenansicht einer Vorrichtung mit einer Breitsteckwalze in modifizierter Ausgestaltung,
- Figur 4:: eine Seitenansicht ähnlich Figur 3 von der gegenüberliegenden Seite aus gesehen,
- Figur 5:: einen Schnitt durch die Vorrichtung gemäß der Linie C-C in Figur 4,
- Figur 6:: eine Queransicht einer Vorrichtung mit einer Breitsteckwalze und
- Figur 7:: einen Schnitt durch die Vorrichtung gemäß der Linie A-A in Figur 6.

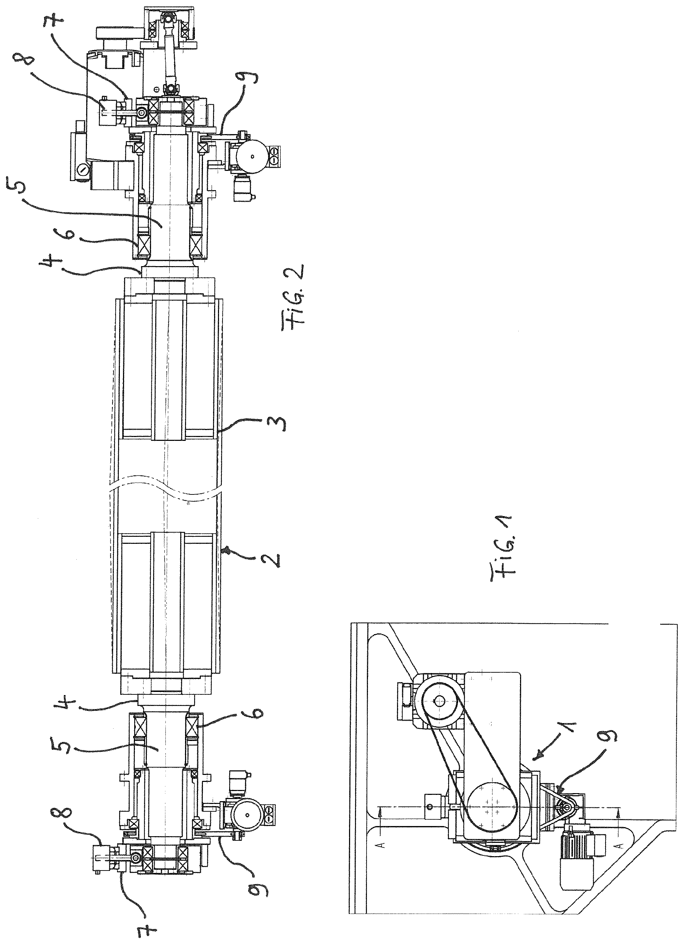

In den Figuren 1 bis 7 ist, soweit im Einzelnen dargestellt, mit der Bezugsziffer 1 ein Maschinengestell bezeichnet, in dem eine mit der Bezugsziffer 2 bezeichnete Breitsteckwalze gelagert und geführt ist. Die Breitstreckwalze 2 weist ein Walzenrohr 3 auf, das beidseitig mit Lagerzapfen 4 in Wirkverbindung steht. An der aus dem Walzenrohr 3 herausragenden Stelle der Lagerzapfen 4, bei der es sich etwa um die Mitte der Lagerzapfen 4 handelt, sind diese am Maschinengestell 1 gelagert. Es handelt sich dabei um pendelndes Lager, da um diese Stellen die Lagerzapfen 4 verschwenkt werden. Das äußere, als Längszapfen 5 bezeichnete Ende der Lagerzapfen 4 weist Lager 6 auf, an denen Verstellmittel 7 angreifen, durch die das Ende der Lagerzapfen 4 radial verschwenkt werden kann. Die Verstellmittel 7 weisen eine Gewindestange mit einer Spannmutter 8 auf, wobei die Spannmutter 8 auf einer Hülse abgestützt ist, die im Maschinengestell 1 schwenkbar gelagert ist. Die Spannmutter 8 kann mittels Hand oder eines Antriebselements betätigt werden. Durch Verdrehen der Hülse mitsamt den Verstellmitteln 7 durch Verdrehmittel 9 kann die Richtung verändert werden, in der die Lagerzapfen 4 verschwenkt und damit das Walzenrohr 3 gebogen werden kann.

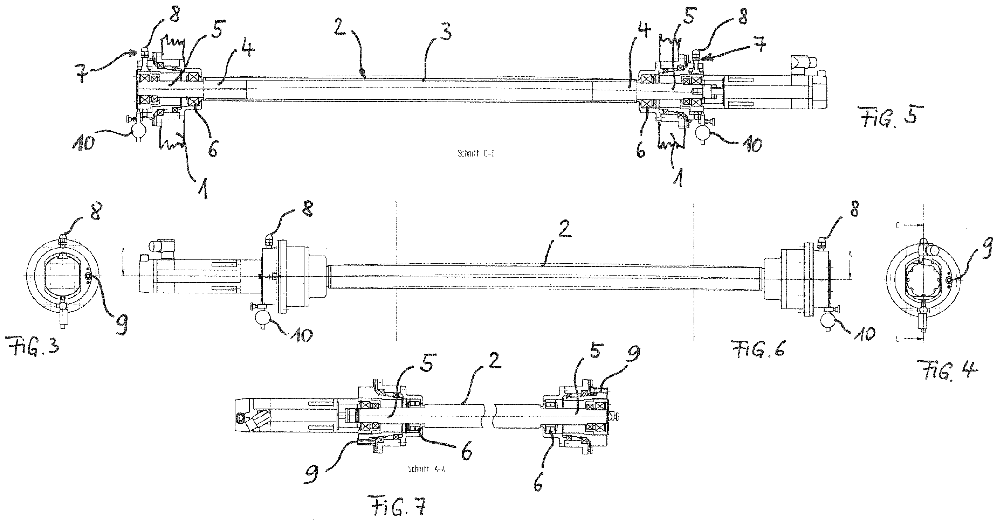

Das Walzenrohr 3 kann auf den Lagerzapfen 4 mittels zweier mit Abstand zueinander angeordneter Lager geführt werden. Dann erfolgt der Antrieb des Walzenrohres 3 durch eine eigenständige Antriebseinrichtung. Sind die Lagerzapfen 4 in dem Walzenrohr 3, wie in den Figuren 5 bis 7 dargestellt, fixiert, so kann der Antrieb der Lagerzapfen 4 und des Walzenrohres 3 gleichzeitig erfolgen.

Die Lagerzapfen 4 können aber auch gemäß den Figuren 6 und 7 Bestandteile einer Welle sein, auf der ein Walzenrohr 3 befestigt ist. Es ist auch möglich, dass die Welle selbst als Walzenrohr ausgebildet ist.

### Bezugszeichenliste

- 1: Maschinengestell
- 2: Breitstreckwalze
- 3: Walzenrohr
- 4: Lagerzapfen
- 5: Längszapfen
- 6: Lager
- 7: Verstellmittel
- 8: Spannmutter
- 9: Verdrehmittel
- 10: Messmittel

## Patentansprüche

1. Vorrichtung mit einer Breitstreckwalze (2), die ein Walzenrohr (3) aufweist, über das eine Materialbahn geführt ist, wobei diese durch eine Verbiegung der Breitstreckwalze (2) entlang ihrer Längsachse breitstreckbar ist, mit zwei Lagerzapfen (4), die mit dem Walzenrohr (3) in Wirkverbindung stehen und in einem Maschinengestell (1) schwenkbar angelenkt sind, wobei die Lagerzapfen (4) mittels schwenkbarer Lager (6) am Maschinengestell (1 ) gelagert sind und diese die Lager (6) überragende Längszapfen (5) aufweisen, an deren Enden radial angreifende Verstellmittel (7) angeordnet sind, **dadurch gekennzeichnet, dass** die Verstellmittel (7) am Längszapfen (5) angreifende Lager aufweisen, an deren Gehäuse die Verstellmittel (7) angreifen, wobei die Verstellmittel (7) in Umfangsrichtung der Breitstreckwalze (2) verschwenkbar angeordnet sind und wobei die Verstellmittel (7) auf einer Hülse angeordnet sind, die im Maschinengestell (1 ) schwenkbar gelagert und mit Verdrehmitteln (9) versehen sind und den Verdrehmitteln (9) ein Drehantrieb zugeordnet ist.

2. Vorrichtung nach Anspruch 1, **dadurch gekennzeichnet, dass** die Verstellmittel (7) eine Gewindestange mit Spannmutter (8) aufweisen.

3. Vorrichtung nach Anspruch 2, **dadurch gekennzeichnet, dass** der Spannmutter (8) ein Verdrehelement zugeordnet ist.

4. Vorrichtung nach einem der vorhergehenden Ansprüche, **dadurch gekennzeichnet, dass** das schwenkbare Lager (6) als Pendellager, vorzugsweise mehrreihiges Pendelrollenlager, ausgeführt und etwa in der Längsmitte des Lagerzapfens (4) angeordnet ist.

5. Vorrichtung nach einem der vorhergehenden Ansprüche, **dadurch gekennzeichnet, dass** die Lagerzapfen (4) im Walzenrohr (3) mittels zwei mit Abstand angeordneten Lagern, die vorzugsweise als Pendellager ausgebildet sind, geführt sind.

6. Vorrichtung nach einem der vorhergehenden Ansprüche, **dadurch gekennzeichnet, dass** die Lagerzapfen (4) im Walzenrohr (3) fixiert sind.

7. Vorrichtung nach einem der vorhergehenden Ansprüche, **dadurch gekennzeichnet, dass** die Lagerzapfen (4) Bestandteile einer Welle sind, auf der das Walzenrohr (3) geführt ist.

8. Vorrichtung nach einem der vorhergehenden Ansprüche, **dadurch gekennzeichnet, dass** die Verstellmittel (7) bezüglich der Wirkrichtung der Kraft zur Erzeugung des Biegemomentes parallel oder aber- winkelversetzt zueinander angeordnet sind.

9. Vorrichtung nach einem der vorhergehenden Ansprüche, **dadurch gekennzeichnet, dass** Messmittel (10) vorgesehen sind, wobei die Verbiegung des Walzenrohres (3) am Ort der Verstellmittel (7) durch die Messmittel (10) bestimmt wird.

## Claims

1. Device with a spreader roll (2), which has a roll tube (3), over which a material web is guided, said material web being spreadable by bending of the spreader roll (2) along its longitudinal axis, having two bearing journals (4), which are operatively connected to the roll tube (3) and are pivotably articulated in a machine frame (1), wherein the bearing journals (4) are mounted on the machine frame (1) by means of pivotable bearings (6) and said bearing journals have longitudinal pins (5) projecting over the bearings (6) and at the ends of which radially engaging adjustment means (7) are arranged, **characterized in that** the adjustment means (7) have bearings which engage on the longitudinal pin (5) and on the housings of which the adjustment means (7) engage, wherein the adjustment means (7) are pivotably arranged in the circumferential direction of the spreader roll (2), and wherein the adjustment means (7) are arranged on a sleeve, which is pivotably mounted in the machine frame (1) and provided with torsion means (9), and a rotary drive is assigned to the torsion means (9).

2. Device according to Claim 1, **characterized in that** the adjustment means (7) have a threaded rod with a clamping nut (8).

3. Device according to Claim 2, **characterized in that** the clamping nut (8) is assigned a torsion element.

4. Device according to any one of the preceding claims, **characterized in that** the pivotable bearing (6) is designed as a self-aligning bearing, preferably a multi-row self-aligning roller bearing, and is arranged approximately in the longitudinal centre of the bearing journal (4).

5. Device according to any one of the preceding claims, **characterized in that** the bearing journals (4) are guided in the roll tube (3) by means of two spaced bearings, which are preferably designed as self-aligning bearings.

6. Device according to any one of the preceding claims, **characterized in that** the bearing journals (4) are fixed in the roll tube (3).

7. Device according to any one of the preceding claims, **characterized in that** the bearing journals (4) are components of a shaft on which the roll tube (3) is guided.

8. Device according to any one of the preceding claims, **characterized in that** the adjustment means (7) are arranged parallel or offset from one another at an angle with respect to the operative direction of the force for generating the bending moment.

9. Device according to any one of the preceding claims, **characterized in that** measuring means (10) are provided, wherein the bending of the roll tube (3) at the location of the adjustment means (7) is determined by the measuring means (10).

## Revendications

1. Dispositif avec un rouleau déplisseur (2), qui présente un tube de rouleau (3), sur lequel est guidée une bande de matériau, celle-ci pouvant être déplissée par une flexion du cylindre déplisseur (2) le long de son axe longitudinal, avec deux tourillons (4), qui sont en liaison active avec le tube de rouleau (3) et sont articulés de manière pivotante dans un bâti de machine (1), les tourillons (4) étant montés sur le bâti de machine (1) au moyen de paliers pivotants (6) et ceux-ci présentant des tenons longitudinaux (5) dépassant des paliers (6), aux extrémités desquels sont agencés des moyens de réglage (7) agissant radialement, **caractérisé en ce que** les moyens de réglage (7) présentent des paliers agissant sur le tenon longitudinal (5), sur le boîtier desquels agissent les moyens de réglage (7), les moyens de réglage (7) étant agencés de manière pivotante dans la direction périphérique du rouleau déplisseur (2) et les moyens de réglage (7) étant agencés sur une douille qui est montée de manière pivotante dans le bâti de machine (1) et qui est munie de moyens de rotation (9) et un entraînement en rotation étant associé aux moyens de rotation (9).

2. Dispositif selon la revendication 1, **caractérisé en ce que** les moyens de réglage (7) présentent une tige filetée avec un écrou de serrage (8).

3. Dispositif selon la revendication 2, **caractérisé en ce qu'**un élément de torsion est associé à l'écrou de serrage (8).

4. Dispositif selon l'une quelconque des revendications précédentes, **caractérisé en ce que** le palier pivotant (6) est conçu sous forme de palier oscillant, de préférence de palier oscillant sur rouleaux à plusieurs rangées, et est agencé approximativement au milieu de la longueur du tourillon (4).

5. Dispositif selon l'une quelconque des revendications précédentes, **caractérisé en ce que** les tourillons (4) sont guidés dans le tube de rouleau (3) au moyen de deux paliers agencés à distance, qui sont de préférence réalisés sous forme de paliers oscillants.

6. Dispositif selon l'une quelconque des revendications précédentes, **caractérisé en ce que** les tourillons (4) sont fixés dans le tube de rouleau (3).

7. Dispositif selon l'une quelconque des revendications précédentes, **caractérisé en ce que** les tourillons (4) sont des constituants d'un arbre sur lequel le tube de rouleau (3) est guidé.

8. Dispositif selon l'une quelconque des revendications précédentes, **caractérisé en ce que** les moyens de réglage (7) sont agencés parallèlement ou décalés angulairement les uns par rapport aux autres par rapport à la direction d'action de la force de génération du moment de flexion.

9. Dispositif selon l'une quelconque des revendications précédentes, **caractérisé en ce que** des moyens de mesure (10) sont prévus, la flexion du tube de rouleau (3) à l'emplacement des moyens de réglage (7) étant déterminée par les moyens de mesure (10).
